# EUROPEAN PATENT APPLICATION

(11) **EP 4 496 066 A1**
(43) Date of publication of application: **22.01.2025**
(21) Application number: 24188301.6
(22) Date of filing: 12.07.2024
(51) Int. Cl.: H01M 10/0587, H01M 50/107, H01M 50/119, H01M 50/124, H01M 50/188, H01M 50/186, H01M 50/122

(54) **CYLINDRICAL SECONDARY BATTERY**

(30) Priority: 13.07.2023 KR 20230090964
(71) Applicant: SAMSUNG SDI CO., LTD., Giheung-gu Yongin-si, Gyeonggi-do 17084 (KR)
(72) Inventor: Park, Gun Gue, 17084 Yongin-si, Gyeonggi-do (KR); Jun, Woo Tae, 17084 Yongin-si, Gyeonggi-do (KR); Yu, Gwan Hyeon, 17084 Yongin-si, Gyeonggi-do (KR); Jung, Hyun Ki, 17084 Yongin-si, Gyeonggi-do (KR); Ko, Sung Gwi, 17084 Yongin-si, Gyeonggi-do (KR); Yoo, Yoon Sun, 17084 Yongin-si, Gyeonggi-do (KR); Kim, Myung Seob, 17084 Yongin-si, Gyeonggi-do (KR); Kim, Mun Sung, 17084 Yongin-si, Gyeonggi-do (KR)
(74) Representative: Gulde & Partner

(57) **Abstract**

Described is a cylindrical secondary battery (100) in which an inner surface of a can (110) is coated to insulate an electrode assembly (120) and the can (110) from each other and to improve heat resistance of the can (120). The cylindrical secondary battery (100) may include an electrode assembly (120), a can (110) in which the electrode assembly (120) is accommodated and of which one end is opened so as to be electrically connected to the electrode assembly (120), a cap plate (160) electrically connected to the electrode assembly (120), and a rivet terminal (150) insulated from the can (110) and the cap plate (160), which may be configured to seal one end of the can (110) and which may be insulated from the can (110). A first coating layer (180) may be provided on at least a portion of an inner surface of the can (110).

## Description

### FIELD

Embodiments relate to a secondary battery.

### BACKGROUND

In general, a cylindrical secondary battery may include a cylindrical electrode assembly, a cylindrical can accommodating the electrode assembly and an electrolyte, and a cap assembly that seals the can. The cap assembly may be electrically connected to the electrode assembly to electrically connect an external component to the electrode assembly. The electrode assembly may have a shape in which a negative electrode plate, a positive electrode plate, and a separator interposed between the negative electrode plate and the positive electrode plate are wound in a cylindrical shape.

The above-described information that serves as the background of the present disclosure is only for improving understanding of the background of the present disclosure and thus may include information that does not constitute the related art.

### SUMMARY

Aspects of some embodiments of the present disclosure provide a secondary battery in which an inner surface of a can is coated to insulate an electrode assembly and a can from each other and to improve heat resistance of the can.

According to some embodiments, a cylindrical secondary battery includes: an electrode assembly; a can that accommodates the electrode assembly, wherein one end of the can is opened, and wherein the can is configured to be electrically connected to the electrode assembly; a cap plate electrically connected to the electrode assembly; and a rivet terminal insulated from the can and the cap plate, wherein the cap plate is configured to seal the one end of the can and is insulated from the can, and wherein a first coating layer is provided on at least a portion of an inner surface of the can.

The can may include a top surface portion and a side surface portion extending from an edge of the top surface portion, and the first coating layer may not be provided on the one end of the can of the side surface portion.

A second coating layer may be provided on a portion of an outer surface of the can.

The can may include a top surface portion in which a terminal hole, through which the rivet terminal passes, is provided, and the can may include a side surface portion extending from an edge of the top surface portion, and the second coating layer may be configured to surround the terminal hole.

The second coating layer may have a size corresponding to a size of the rivet terminal.

The second coating layer may have a size greater than a size of the rivet terminal.

The first coating layer may have a thickness of approximately 0.01 mm to approximately 0.03 mm.

The first coating layer may be provided to the side surface portion and may be provided to the top surface portion. A thickness of the first coating layer provided to the side surface portion may be thinner than a thickness of the first coating layer provided to the top surface portion.

The first coating layer may be provided with an organic/inorganic hybrid coating solution.

The organic/inorganic hybrid coating solution may be made of resin, and nano ceramic or nano metal oxide.

A beading part recessed inward may be provided in the side surface portion of the can, and the first coating layer may not be provided in the beading part.

The electrode assembly may include a positive electrode plate, a negative electrode plate, and a separator, and the electrode assembly may further include a negative electrode current collecting plate that is in contact with the beading part to electrically connect the can to the negative electrode plate and a positive electrode current collecting plate configured to electrically connect the rivet terminal to the positive electrode plate.

A crimping part spaced apart from the beading part and bent inward may be provided in a lower end of the can, and the first coating layer may be provided from the beading part up to the crimping part.

A first gasket may be interposed between the can and the rivet terminal.

A second gasket may be interposed between the can and the positive electrode current collecting plate.

A third gasket may be interposed between the can and the cap plate.

A method of manufacturing a cylindrical secondary battery according to some embodiments includes providing a can to accommodate an electrode assembly, wherein one portion of the can comprises an opening, and wherein the can is configured to be electrically connected to the electrode assembly; forming a first coating layer on at least a portion of an inner surface of the can; inserting the electrode assembly through the opening; electrically connecting a cap plate to the electrode assembly; and inserting a rivet terminal into a terminal hole provided in a top surface portion of the can, wherein the rivet terminal is insulated from the can and the cap plate, and wherein the cap plate is configured to seal the one portion of the can and is insulated from the can.

The first coating layer may not be formed on the one portion of the can.

The method may include forming a second coating layer on a portion of an outer surface of the can, wherein the second coating layer may be configured to surround the terminal hole.

The first coating layer may be formed with an organic/inorganic hybrid coating solution.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

FIG. 1 illustrates a perspective view of a cylindrical secondary battery according to some embodiments;
FIG. 2 illustrates a cross-sectional view of the cylindrical secondary battery of FIG. 1;
FIG. 3 illustrates an enlarged cross-sectional view of a portion A in the cylindrical secondary battery of FIG. 2;
FIG. 4 illustrates a bottom perspective view of a configuration in which a negative electrode current collecting plate is coupled to a lower portion of a cylindrical can;
FIG. 5 illustrates a bottom perspective view of a state in which the can is separated from the cylindrical secondary battery of FIG. 1; and
FIG. 6 illustrates a perspective view of a can of a cylindrical secondary battery according to other embodiments.

### DETAILED DESCRIPTION

Embodiments of the present disclosure may be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the drawings, the thickness or size of each layer is exaggerated for convenience and clarity of description, and the same reference numerals in the drawings refer to the same elements.

As used herein, the term "and/or" includes any and all combinations of one or more of the associated listed items. In this specification, it will also be understood that if a member A is referred to as being connected to a member B, the member A can be directly connected to the member B or indirectly connected to the member B with a member C therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the present techniques according to various process states or usage states of the present techniques, and thus, the present disclosure is not limited thereto. For example, an element or feature shown in the drawings is turned inside out, the element or feature described as "beneath" or "below" may change into "above" or "upper". Thus, the term "lower" may encompass the term "upper" or "below".

The term "approximately" may be used to mean within ±20% of a target value in some embodiments, within ±10% of a target value in some embodiments, and within ±5% of a target value in some embodiments. The term "approximately" may equal the target value.

As described herein, a cylindrical secondary battery may include a cylindrical electrode assembly, a cylindrical can accommodating the electrode assembly and an electrolyte, and a cap assembly that seals the can. The cap assembly may be electrically connected to the electrode assembly to electrically connect an external component to the electrode assembly. The electrode assembly may have a shape in which a negative electrode plate, a positive electrode plate, and a separator interposed between the negative electrode plate and the positive electrode plate are wound in a cylindrical shape.

Here, because the insulation is required between the electrode assembly and the inner surface of the can, the outside of the electrode assembly may have to be wrapped with an insulating tape, or an insulator may have to be inserted between the electrode assembly and the can. However, to delay melting of a side surface of the can by heat if an internal event occurs, a thickness of the can has to be increased. However, there can be a limitation in that an inner space is reduced if the can increases in thickness.

Hereinafter, a cylindrical secondary battery according to embodiments of the present disclosure will be described in detail with reference to the accompanying drawings.

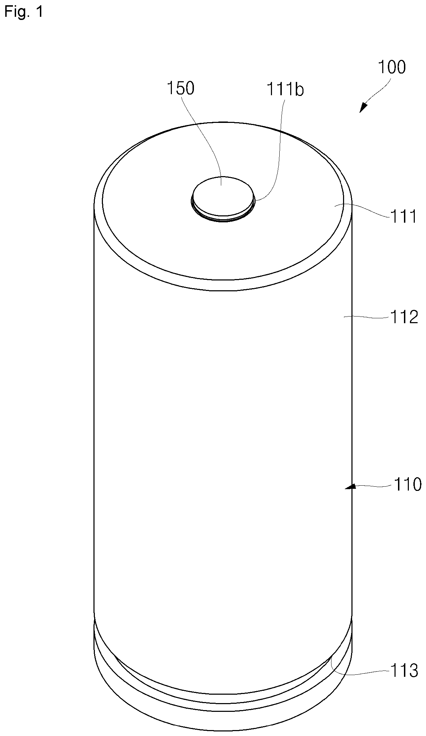

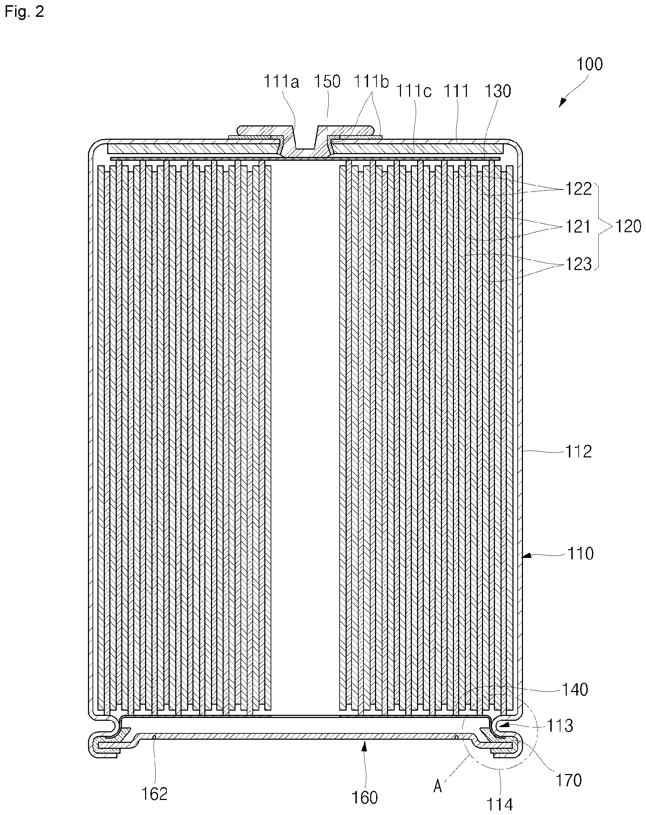

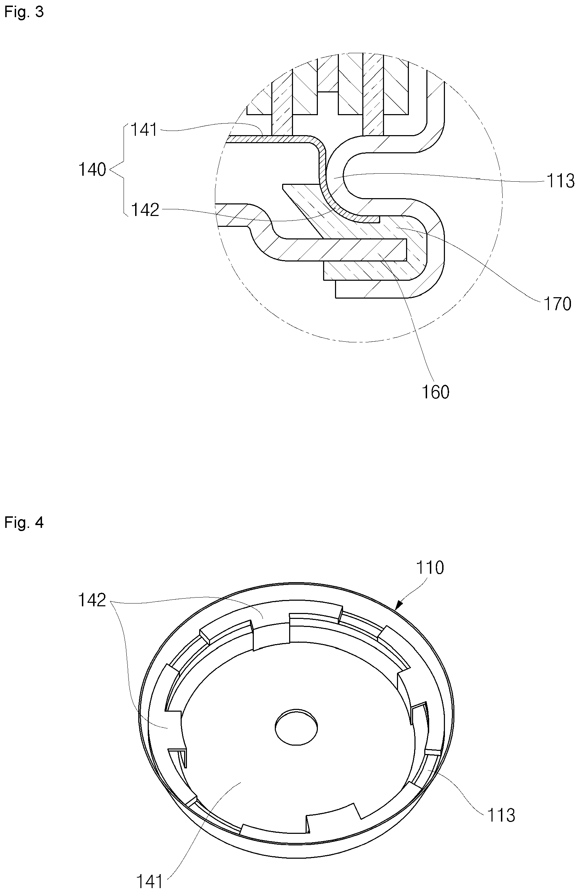

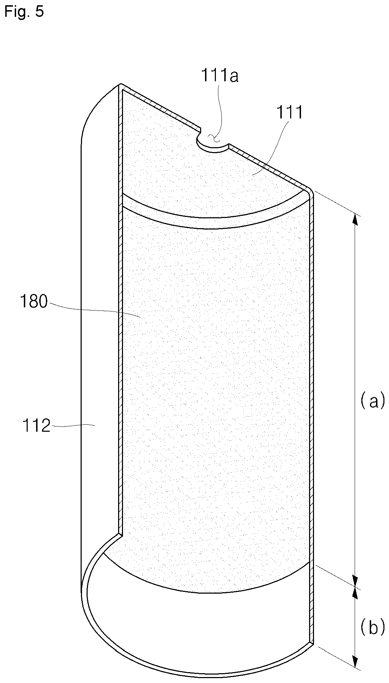

FIG. 1 illustrates a perspective view of a cylindrical secondary battery according to some embodiments. FIG. 2 is a cross-sectional view illustrating the cylindrical secondary battery of FIG. 1. FIG. 3 illustrates an enlarged cross-sectional view of a portion A in the cylindrical secondary battery of FIG. 2. FIG. 4 illustrates a bottom perspective view of a configuration in which a negative electrode current collecting plate is coupled to a lower portion of a cylindrical can. FIG. 5 illustrates a bottom perspective view of a state in which the can is separated from the cylindrical secondary battery of FIG. 1.

Referring to FIGS. 1 and 2, a secondary battery 100 according to some embodiments may include a can 110, an electrode assembly 120 accommodated inside the can 110, a positive electrode current collecting plate 130 and a negative electrode current collecting plate 140, which are electrically connected to the electrode assembly 120, a rivet terminal 150 coupled to a terminal hole provided at one end of the can 110, and a cap plate 160 that seals an opening of the other end of the can 110. A plurality of gaskets 111b and 111c may be provided to insulate the rivet terminal 150 and the can 110 from each other and to insulate the positive electrode current collecting plate 130 and the can 110 from each other. In some embodiments, an additional gasket 170 may be provided to insulate the cap plate 160 and the can 110 from each other.

The can 110 may be provided in a cylindrical shape and may include a circular top surface portion 111 and a side surface portion 112 extending by a predetermined length downward from an edge of the top surface portion 111. The top surface portion 111 and the side surface portion 112 of the can 110 may be integrated with each other.

The circular top surface portion 111 may have a flat circular plate shape and may include a terminal hole 111a passing through a central portion thereof. A rivet terminal 150 may be inserted and coupled to the terminal hole 111a. A first gasket 111b, such as for sealing and electrical insulation, may be interposed between the terminal hole 111a and the rivet terminal 150. The first gasket 111b may block contact between the rivet terminal 150 and the can 110 to electrically separate the rivet terminal 150 and the can 110 from each other. One or more first gaskets 111b may be provided. In some embodiments, the terminal hole 111a of the top surface portion 111 may be sealed by the first gasket 111b. The first gasket 111b may be made of a resin material such as polyethylene (PE), polypropylene (PP), polyethylene terephthalate (PET), or the like.

In the cylindrical secondary battery 100, a lower portion of the can 110 may be opened during a manufacturing process. In some embodiments, during the process of manufacturing the cylindrical secondary battery 100, the electrode assembly 120 may be inserted through the opened lower portion of the can 110 together with the electrolyte. In some embodiments, the electrolyte and the electrode assembly 120 may be inserted into the can 110 such that the opened lower portion faces an upper side. After the electrolyte and the electrode assembly 120 are inserted into the can 110, the cap plate 160 may be coupled to an opened lower end to seal the can 110. Here, the electrolyte serves to enable movement of lithium ions between a positive electrode plate 121 and a negative electrode plate 122, which constitute the electrode assembly 120. The electrolyte may be a non-aqueous organic electrolyte that is a mixture of lithium salt and a high-purity organic solvent. Furthermore, the electrolyte may be a polymer using a polymer electrolyte or a solid electrolyte, as the type of the electrolyte is not so limited here.

The can 110 may be made of steel, a steel alloy, aluminum, an aluminum alloy, or an equivalent thereof, but the material thereof is not limited thereto. In some embodiments, a beading part 113 and a crimping part 114 may be provided on the side surface portion 112 of the can 110. The beading part 113 may be provided by recessing a portion of the side surface portion 112 inward to prevent the electrode assembly 120 from being separated to the outside. The crimping part 114 may be provided by bending an end of the side surface portion 112, which is spaced apart from the beading part 113, inward. That is, the beading part 113 may be provided at an upper side, and the crimping part 114 may be provided at a lower side with respect to a center of the cap plate 160.

In the can 110, after the electrode assembly 120 is inserted through the opened lower end of the can 110, the beading part 113 may be provided to prevent the electrode assembly 120 from being separated from the can 110. That is, a lower edge of the electrode assembly 120 may be seated on the beading part 113. In some embodiments, the lower edge of the electrode assembly 120 may be seated on a flat portion of an upper portion of the beading part 113.

The electrode assembly 120 may include a positive electrode plate 121 coated with a positive electrode active material, a negative electrode plate 122 coated with a negative electrode active material, and a separator 123 interposed between the positive electrode plate 121 and the negative electrode plate 122. In the electrode assembly 120, the positive electrode plate 121, the negative electrode plate 122, and the separator 123 may be stacked and then wound in an approximately cylindrical shape. In some embodiments, a positive electrode non-coated portion of the positive electrode plate 121 that is not coated with the positive electrode active material may protrude toward an upper side of the electrode assembly 120. A negative electrode non-coated portion of the negative electrode plate 122 that is not coated with the negative electrode active material may protrude toward a lower side of the electrode assembly 120.

In the positive electrode plate 121, at least one surface of the positive electrode plate that may be a plate-shaped metal foil made of aluminum (Al) may be coated with the positive electrode active material made of transition metal oxide. In some embodiments, the positive electrode plate 121 may be provided with the positive electrode non-coated portion, which is not coated with the positive electrode active material, on an upper end thereof. As described above, the positive electrode non-coated portion may protrude toward the upper side of the electrode assembly 120. That is, the positive electrode non-coated portion of the positive electrode plate 121 may protrude upward further than the negative electrode plate 122 and the separator 123.

In the negative electrode plate 122, at least one surface of the negative electrode plate that may be a plate-shaped metal foil made of copper (Cu) or nickel (Ni) may be coated with the negative electrode active material such as graphite or carbon. In addition, the negative electrode plate 122 may be provided with the negative electrode non-coated portion, which is not coated with the negative electrode active material, on a lower end thereof. As described above, the negative electrode non-coated portion may protrude toward the lower side of the electrode assembly 120. That is, the negative electrode non-coated portion of the negative electrode plate 122 may protrude downward further than the positive electrode plate 121 and the separator 123.

The separator 123 may be made of polyethylene (PE) or polypropylene (PP), but the embodiments are not limited thereto. The separator may prevent electrical short between the positive electrode plate 121 and the negative electrode plate 122 from occurring and may allow only the lithium ions to move.

A positive electrode current collecting plate 130 may be a circular metal plate having a shape corresponding to the top surface of the electrode assembly 120. A planar size of the positive electrode current collecting plate 130 may be equal to or less than a size of the upper portion of the electrode assembly 120. The positive electrode current collecting plate 130 may be made of aluminum (Al). A bottom surface of the positive electrode current collecting plate 130 may be fixed and electrically connected to the positive electrode non-coated portion, which may be exposed at an upper side of the electrode assembly 120, by welding. A top surface of the positive electrode current collecting plate 130 may be fixed and electrically connected to the rivet terminal 150 by welding such that the top surface of the positive electrode current collecting plate is in contact with the bottom surface of the rivet terminal 150. The positive electrode current collecting plate 130 may serve as a path for a current flow between the positive electrode plate 121 of the electrode assembly 120 and the rivet terminal 150. In some embodiments, a second gasket 111c may be provided between (e.g., interposed between) the positive electrode current collecting plate 130 and the top surface portion 111 of the can 110. A size of the second gasket 111c may be equal to or greater than that of the positive electrode current collecting plate 130.

Referring to FIGS. 2 to 4, the negative electrode current collecting plate 140 may include a circular planar part 141 corresponding to the bottom surface of the electrode assembly 120 and an extension part 142 extending downward from an edge of the planar part 141. A top surface of the planar part 141 may be in contact with the bottom surface of the electrode assembly 120. The top surface of the planar part 141 may be fixed and electrically connected to the negative electrode non-coated portion exposed at a lower side of the electrode assembly 120 by welding so as to be in contact with the bottom surface of the electrode assembly 120.

The extension part 142 may be provided in multiple portions to be spaced apart from each other along the edge of the planar part 141. FIG. 4 illustrates a bottom perspective view of a state in which the negative electrode current collecting plate 140 is seated on the beading part 113 after the beading part 113 is provided in the can 110. Referring to FIG. 4, the extension part 142 is illustrated as having four parts that are symmetrical to each other with respect to the planar part 141, but is not limited thereto. The extension part 142 may be bent to extend downward from the edge of the planar part 141. The extension part 142 may be fixed to the beading part 113. In some embodiments, the extension part 142 may be welded to be in contact with the flat portion of the lower portion of the beading part 113 and thus may be fixed and electrically connected to the can 110. The negative electrode current collecting plate 140 may serve as a path of current flow between the negative electrode plate 122 of the electrode assembly 120 and the can 110. In some embodiments, and referring to FIG. 4, the welding of the extension part 142 and the beading part 113 may be performed before the crimping part 114 of the can 110 is provided.

The rivet terminal 150 may be inserted into the terminal hole 111a provided in the top surface portion 111 of the can 110, passing through the terminal hole, and electrically connected to the positive electrode current collecting plate 130. The rivet terminal 150 may be made of a material that is the same as or similar to that of each of the positive electrode current collecting plate 130 and the positive electrode plate 121, such as including but not limited to aluminum (Al). Each of a diameter of a portion of the rivet terminal 150, which is exposed to an upper side of the can 110, and a diameter of a portion of the rivet terminal 150, which is disposed inside the can 110, may be greater than that of the rivet terminal 150, which is disposed in the terminal hole 111a. For simplicity, the portion exposed to the upper side of the can 110 will be referred to as an upper end of the rivet terminal 150, and the portion disposed inside the can 110 to face the electrode assembly 120 will be referred to as a lower end of the rivet terminal 150. After the rivet terminal 150 is coupled to the terminal hole 111a upward from the lower side (e.g., from the bottom to the top), the upper end may be compressed and deformed by a processing method such as pressing or spinning so as to be in close contact with the top surface portion 111. In some embodiments, on the contrary, the rivet terminal 150 may be inserted into the terminal hole 111a from the outside of the can 110, and then, a lower end of the rivet terminal 150 may be compressed and deformed so as to be in close contact with the inside of the top surface portion 111. In some embodiments, the first gasket 111b may be interposed between the rivet terminal 150 and the terminal hole 111a to electrically insulate the rivet terminal 150 and the can 110 from each other. The rivet terminal 150 may be electrically connected to the positive electrode plate 121 of the electrode assembly 120 through the positive electrode current collecting plate 130.

The cap plate 160 may be a circular metal plate and may be coupled to the lower end of the can 110. The cap plate 160 may be coupled to the lower end of the can 110 in a state in which the third gasket 170 is interposed so as to prevent the cap plate from being electrically connected to the can 110. Because, in some embodiments, the cap plate 160 is not electrically connected to the positive electrode or the negative electrode of the electrode assembly 120, the cap plate 160 may not have a separate electrical polarity. In some embodiments, a notch 162 may be provided in the cap plate 160 so as to be opened at a set pressure. If an internal pressure of the can 110 exceeds a breaking pressure, the notch 162 may be broken to discharge an internal gas. That is, if an excessive internal pressure is generated inside the can 110, the notch 162 may be broken, and thus, the excessive internal pressure may be reduced.

The cap plate 160 may be fixed by forming the crimping part 114 at the lower end of the can 110 such that the edge of the cap plate 160 is seated on the lower portion of the beading part 113 of the can 110. Here, the cap plate 160 of the can 110 may be seated on the beading part 113 in the state in which the opened lower portion faces the upper side. In some embodiments, the cap plate 160 may be seated on the lower portion of the beading part 113 of the can 110 in a state in which a third gasket 170 is interposed therebetween. Thereafter, the crimping part 114 of the can 110 may be bent in an inward direction of the cap plate 160 to press the third gasket 170 so as to couple the cap plate 160 to the can 110.

The third gasket 170 may be made of a resin material such as polyethylene (PE), polypropylene (PP), polyethylene terephthalate (PET), or the like. The third gasket 170 may press and seal a gap between the can 110 and the cap plate 160. The third gasket 170 may prevent the cap plate 160 from being separated from the can 110.

Referring to FIG. 5, in some embodiments, a first coating layer 180 may be provided on a portion of an inner surface of the can 110. The first coating layer 180 may be provided with an organic/inorganic hybrid coating solution. The organic/inorganic hybrid coating solution may be made of and/or may be provided as resin and nano ceramic or nano metal oxide to have chemical resistance (e.g., electrolyte resistance), insulation, adhesion, and heat resistance. For example, a resin may correspond to polyamide-imides (PAI e.g., Torlon^{®}), silicone, epoxy, a PP resin, etc. The first coating layer 180 may serve as an insulating layer inside the can 110.

FIG. 5 illustrates the can 110 before the beading part 113 and the crimping part 114 are molded. In some embodiments, the first coating layer 180 may be provided on portions of the inner surface of the top surface portion 111 and the inner surface of the side surface portion 112 of the can 110. In some embodiments, the first coating layer 180 may not be provided on one end of an opened side of the side surface portion 112. This may be because, in some embodiments, the can 110 has to be electrically connected by being in contact with the negative electrode current collecting plate 140 through the beading part 113.

As described above, because the negative electrode current collecting plate 140 is in contact with the beading part 113 of the can 110, the first coating layer 180 should not be provided on the beading part 113. In some embodiments, the first coating layer 180 may be provided from the upper portion of the side surface portion 112 of the can 110 up to the beading part 113 (corresponding to a section (a) in FIG. 5). In some embodiments, the first coating layer 180 may not be provided from the beading part 113 to the crimping part 114 (corresponding to a section (b) in FIG. 5). Even if the first coating layer 180 is not provided in the crimping part 114, because the third gasket 170 is interposed between the can 110 and the cap plate 160, the cap plate 160 may be insulated from the can 110. However, the embodiments are not limited thereto, and the first coating layer 180 may be provided not only in the beading part 113, but also in the crimping part 114. That is, the third gasket 170 may not be provided, or the first coating layer 180 may be provided on an area of the crimping part 114 for additional insulation purposes.

Accordingly, the can 110 may be electrically connected to the negative electrode current collecting plate 140, and the first coating layer 180 may be provided on the inner surface facing the electrode assembly 120. In some embodiments, the electrode assembly 120 and the can 110 may be insulated from each other by the coating layer 180. In some embodiments, parts such as insulating tape or an insulator, each of which may generally have a thickness of approximately 0.3 mm to approximately 0.8 mm, may be removed and/or not included, and the first coating layer 180 may be provided to have a thinner thickness, and thus, the inner space of the can 110 may be expanded. The first coating layer 180 may have a thickness of approximately 0.01 mm to approximately 0.03 mm.

In some embodiments, the thickness of the first coating layer 180 applied on the side surface portion 112 of the can 110 may be thinner than that of the first coating layer 180 applied on the top surface portion 111.

As described above, a portion of the inner surface of the can 110 may be coated with the organic/inorganic hybrid coating solution to improve the heat resistance of the can, and the thickness of the can may be reduced, and thus, the inner space of the can may be expanded. As a result, the capacity of the secondary battery may increase due to the expansion of the inner space of the can, and the cost may be reduced if implementing the same capacity.

In some embodiments, during the manufacturing process of the can 110, the can 110 may be molded to have the top surface portion 111 and the side surface portion 112, and may then be coated after being cleaned. In the coating process, the first coating layer 180 may be formed through the organic/inorganic hybrid coating solution described herein. Thereafter, the first coating layer 180 may be cured by high-temperature drying or UV curing.

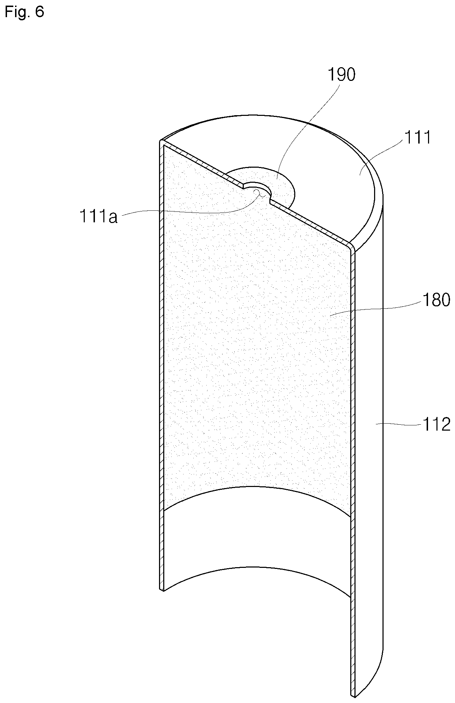

Next, a cylindrical secondary battery according to other embodiments will be described with reference to FIG. 6.

FIG. 6 illustrates a perspective view of a can of a cylindrical secondary battery according to other embodiments.

In some embodiments, a structure of the cylindrical secondary battery 100 may be the same as described above. Further, the cylindrical secondary battery may include elements as described in relation to FIG. 1. However, in addition to the first coating layer 180 provided on the portion of the inner surface of the can 110, a second coating layer 190 may be additionally provided on a portion of an outer surface of the can 110.

FIG. 6 illustrates the can 110 before the beading part 113 and the crimping part 114 are molded. Referring to FIG. 6, in some embodiments, the first coating layer 180 may be provided on at least a portion of the inner surface of the top surface portion 111 and the inner surface of the side surface portion 112 of the can 110. In some embodiments, the first coating layer 180 may be provided from an upper side of the side surface portion 112 of the can 110 up to the beading part 113, and the first coating layer 180 may not be provided from the beading part 113 to the crimping part 114. However, it is not limited thereto, and the first coating layer 180 may be provided not only in the beading part 113, but may also be provided in the crimping part 114 (as an example, from the beading part up to the crimping part).

Accordingly, the can 110 may be electrically connected to the negative electrode current collecting plate 140, and the first coating layer 180 may be provided on the inner surface facing the electrode assembly 120, and thus, the electrode assembly 120 and the can 110 may be insulated from each other. In some embodiments, parts such as insulating tape or an insulator, each of which may generally have a thickness of approximately 0.3 mm to approximately 0.8 mm, may be removed and/or may not be included, and the first coating layer 180 may be provided to have a thinner thickness, and thus, the inner space of the can 110 may be expanded. The first coating layer 180 may have a thickness of approximately 0.01 mm to approximately 0.03 mm.

In some embodiments, the thickness of the first coating layer 180 provided to (e.g., applied on) the side surface portion 112 of the can 110 may be thinner than that of the first coating layer 180 provided to (e.g., applied on) the top surface portion 111.

The second coating layer 190 may be provided around the terminal hole 111a formed in the top surface portion 111 of the can 110. In some embodiments, the second coating layer 190 may surround the terminal hole 111a and have a circular shape corresponding to the shape of the rivet terminal 150. In some embodiments, the rivet terminal 150 and the outer surface of the can 110 may be insulated from each other. Because the first gasket 111b is interposed between the rivet terminal 150 and the can 110 to function as a seal, the first gasket 111b may not be removed. However, because the second coating layer 190 is provided, the thickness of the first gasket 111b may be reduced. The second coating layer 190 may also have a thickness of approximately 0.01 mm to approximately 0.03 mm. If the thickness of the first gasket 111b is reduced, a height at which the rivet terminal 150 protrudes upward may be reduced. A size of the can 110 may increase by the protruding height of the rivet terminal 150. As a result, the capacity of the secondary battery may increase due to expansion of the inner space of the can.

For this purpose, the second coating layer 190 may have a size corresponding to a size of the rivet terminal 150, and more precisely, a size of an upper end of the rivet terminal 150. In some embodiments, for increasing reliable insulation, the second coating layer 190 may have a size greater (e.g., larger) than that of the rivet terminal 150.

The first coating layer 180 and the second coating layer 190 may be provided with an organic/inorganic hybrid coating solution. The organic/inorganic hybrid coating solution may be provided as resin and nano ceramic or nano metal oxide to have chemical resistance (e.g., electrolyte resistance), insulation, adhesion, and heat resistance. For example, a resin may correspond to polyamide-imides (PAI e.g., Torlon^{®}), silicone, epoxy, a PP resin, etc.

As described above, at least a portion of each of the inner surface and the outer surface of the can 110 may be coated with the organic/inorganic hybrid coating solution to improve the heat resistance of the can, and the thickness of the can may be reduced, and thus, the inner space of the can may be expanded. As a result, the capacity of the secondary battery may increase due to the expansion of the inner space of the can, and the cost may be reduced if implementing the same capacity.

According to the embodiments, the inner surface of the can may be coated with the organic/inorganic hybrid coating solution to insulate the electrode assembly and the can from each other, and because the insulating tape or insulator can be removed, the inner space of the can may be expanded.

In some embodiments, the heat resistance of the can may be improved, and the thickness of the can may be reduced, and thus, the inner space of the can may be expanded.

As described above, the capacity of the secondary battery may increase due to the expansion of the inner space of the can, and the cost may be reduced if implementing the same capacity.

In some embodiments, if necessary, the outer surface around the terminal hole of the can may be additionally coated to insulate the rivet terminal and the outer surface of the can from each other. Therefore, the thickness of the gasket for sealing the gap between the rivet terminal and the can and for insulating the rivet terminal and the can from each other may be reduced.

According to some embodiments, there is provided a method of manufacturing a cylindrical secondary battery, the method including providing a can to accommodate an electrode assembly, wherein one portion of the can comprises an opening, and wherein the can is configured to be electrically connected to the electrode assembly; forming a first coating layer on at least a portion of an inner surface of the can; inserting the electrode assembly through the opening; electrically connecting a cap plate to the electrode assembly; and inserting a rivet terminal into a terminal hole provided in a top surface portion of the can, wherein the rivet terminal is insulated from the can and the cap plate, and wherein the cap plate is configured to seal the one portion of the can and is insulated from the can.

According to some embodiments, the first coating layer may not be formed on the one portion of the can, which may be a portion of a side surface portion of the can.

According to some embodiments, the method may include forming a second coating layer on a portion of an outer surface of the can, wherein the second coating layer is configured to surround the terminal hole.

According to some embodiments, the first coating layer may be formed with an organic/inorganic hybrid coating solution.

The above-mentioned embodiments are merely example embodiments, and thus, the present disclosure is not limited to the foregoing embodiments, and also it will be understood by those of ordinary skill in the art that various changes in form and details may be made therein without departing from the scope of the present disclosure as defined by the appended claims and equivalents thereto.

## Claims

1. A cylindrical secondary battery (100) comprising:
an electrode assembly (120);
a can (110) that accommodates the electrode assembly (120), wherein one end of the can (110) is opened, and wherein the can (110) is configured to be electrically connected to the electrode assembly (120);
a cap plate (160) electrically connected to the electrode assembly (120); and
a rivet terminal (150) insulated from the can (110) and the cap plate (160),
wherein the cap plate (160) is configured to seal the one end of the can (110) and is insulated from the can (110),
**characterized in that**
a first coating layer (180) is provided on at least a portion of an inner surface of the can (110).

2. The cylindrical secondary battery (100) as claimed in claim 1, wherein the can (110) comprises a top surface portion (111) and a side surface portion (112) extending from an edge of the top surface portion (111), and
wherein the first coating layer (180) is not provided on the one end of the can (110) of the side surface portion (112).

3. The cylindrical secondary battery (100) as claimed in claim 2, wherein the first coating layer (180) is provided to the side surface portion (112) and provided to the top surface portion (111), and
wherein a thickness of the first coating layer (180) provided to the side surface portion (112) is thinner than a thickness of the first coating layer (180) provided to the top surface portion (111).

4. The cylindrical secondary battery (100) as claimed in claim 2 or 3, wherein a beading part (113) recessed inward is provided in the side surface portion (112) of the can (110), and
wherein the first coating layer (180) is not provided in the beading part (113).

5. The cylindrical secondary battery (100) as claimed in claim 4, wherein the electrode assembly (120) comprises a positive electrode plate (121), a negative electrode plate (122), and a separator (123), and
wherein the electrode assembly (120) further comprises a negative electrode current collecting plate (140) that is in contact with the beading part (113) to electrically connect the can (110) to the negative electrode plate (122) and a positive electrode current collecting plate (130) configured to electrically connect the rivet terminal (150) to the positive electrode plate (121).

6. The cylindrical secondary battery (100) as claimed in claim 4 or 5, wherein a crimping part (114) spaced apart from the beading part (113) and bent inward is provided in a lower end of the can (110), and
wherein the first coating layer (180) is provided from the beading part (113) up to the crimping part (114).

7. The cylindrical secondary battery (100) as claimed in claim 1, wherein a second coating layer (190) is provided on a portion of an outer surface of the can (110).

8. The cylindrical secondary battery (100) as claimed in claim 7, wherein the can (110) comprises a top surface portion (111) in which a terminal hole (111a), through which the rivet terminal (150) passes, is provided, and wherein the can (110) comprises a side surface portion (112) extending from an edge of the top surface portion (111), and
wherein the second coating layer (190) is configured to surround the terminal hole (111a).

9. The cylindrical secondary battery (100) as claimed in claim 7 or 8, wherein the second coating layer (190) has a size corresponding to a size of the rivet terminal (150) or greater than a size of the rivet terminal (150).

10. The cylindrical secondary battery (100) as claimed in any one of the preceding claims, wherein the first coating layer (180) has a thickness of approximately 0.01 mm to approximately 0.03 mm.

11. The cylindrical secondary battery (100) as claimed in any one of the preceding claims, wherein the first coating layer (180) is provided with an organic/inorganic hybrid coating solution, wherein the organic/inorganic hybrid coating solution is optionally made of resin, and nano ceramic or nano metal oxide.

12. The cylindrical secondary battery (100) as claimed in any one of the preceding claims, wherein
a first gasket (111b) is interposed between the can (110) and the rivet terminal (150); and/or
a second gasket (111c) is interposed between the can (110) and the positive electrode current collecting plate (130); and/or
a third gasket (170) is interposed between the can (110) and the cap plate (160).

13. A method of manufacturing a cylindrical secondary battery (100), the method comprising:
providing a can (110) to accommodate an electrode assembly (120), wherein one portion of the can (110) comprises an opening, and wherein the can (110) is configured to be electrically connected to the electrode assembly (120);
forming a first coating layer (180) on at least a portion of an inner surface of the can (110);
inserting the electrode assembly (120) through the opening;
electrically connecting a cap plate (160) to the electrode assembly (120); and
inserting a rivet terminal (150) into a terminal hole (111a) provided in a top surface portion (111) of the can (110),
wherein the rivet terminal (150) is insulated from the can (110) and the cap plate (160), and
wherein the cap plate (160) is configured to seal the one portion of the can (110) and is insulated from the can (110).

14. The method as claimed in claim 13, wherein the first coating layer (180) is not formed on the one portion of the can (110), and/or formed with an organic/inorganic hybrid coating solution.

15. The method as claimed in claim 13 or 14, further comprising forming a second coating layer (190) on a portion of an outer surface of the can (110), wherein the second coating layer (190) is configured to surround the terminal hole (111a).
